# FASCICULE DE BREVET EUROPEEN

(11) **EP 0 579 541 B1**
(45) Date de publication et mention de la délivrance du brevet: **08.05.1996**
(21) Numéro de dépôt: 93401814.4
(22) Date de dépôt: 13.07.1993
(51) Int. Cl.: F02M 31/12, H05B 3/14, G01K 1/16

(54) **Module thermorésistif, dispositif de chauffage le comportant, et son application au réchauffage de dispositifs de commande de débit pour installations d'alimentation de moteurs à combustion interne**
Thermistor mit Heizvorrichtung und seine Anwendung zur Vorheizung von Durchflussregelvorrichtungen für Brennkraftmaschinen-Versorgungsanlagen
Thermistor, including heating device and its application for pre-heating flow regulating devices for internal combustion engine supply systems

(30) Priorité: 17.07.1992 FR 9208862
(43) Date de publication de la demande: 19.01.1994
(73) Titulaire: SOLEX, F-92200 Nanterre (FR)
(72) Inventeur: Joigneau, Jean-Pierre, F-78580 Maule (FR)
(74) Mandataire: Bérogin, Francis

(56) Documents cités:
- EP-A- 0 082 768
- EP-A- 0 248 503
- FR-A- 2 506 845
- US-A- 4 359 974

## Description

L'invention concerne un module thermorésistif, utilisable comme capteur de température ou comme dispositif de chauffage électrique, et du type comprenant une résistance électrique, en particulier une thermistance, ainsi qu'un support électriquement isolant, et deux bornes d'alimentation électrique, qui sont au moins partiellement montées dans le support en étant électriquement isolées l'une de l'autre.

A titre d'exemple d'utilisation particulièrement avantageux, pour lequel le module thermorésistif selon l'invention s'avère tout à fait approprié, l'invention a également pour objet un dispositif de chauffage électrique, comportant un tel module thermorésistif, dont la résistance électrique est une thermistance à coefficient de température positif (CTP).

L'invention a encore pour objet une application particulièrement avantageuse d'un tel dispositif de chauffage électrique au réchauffage d'un corps à conduit d'admission contenant un organe d'étranglement rotatif d'un dispositif de commande de débit pour une installation d'alimentation d'un moteur à combustion interne.

Selon l'invention, dans cette application, le corps à réchauffer peut aussi bien être un corps de carburateur, pour commander le débit de mélange air/combustible, qu'un corps de papillon, pour commander le débit d'air dans une installation d'injection monopoint ou multipoints, le corps étant muni d'un conduit de recyclage des gaz de carter, dont une partie présente une section étranglée, et/ou d'une dérivation sur le conduit d'admission, pour le passage d'un débit d'air de fonctionnement du moteur au ralenti, lorsque le corps est un corps de papillon avec circuit de ralenti, ou d'un débit d'air complémentaire au moteur, lorsque le corps est un corps de carburateur, la dérivation présentant une zone de calibrage de section rétrécie.

On connait de nombreuses réalisations de capteurs de température sous la forme d'un module thermorésistif, comprenant une résistance électrique, telle qu'une thermistance à coefficient de température négatif (CTN) ou positif (CTP), un support électriquement isolant, et deux bornes d'alimentation électrique, au moins partiellement montées dans le support en étant électriquement isolées l'une de l'autre.

Dans certaines réalisations de ces capteurs de température, la thermistance à CTP ainsi que les extrémités des bornes d'alimentation métalliques directement en contact avec elle sont noyées dans une capsule isolante en matière plastique. Dans d'autres réalisations, la thermistance à CTP n'est pas encapsulée dans de la matière plastique, mais présente des faces d'extrémités métallisées auxquelles sont solidarisées les bornes, ou encore ces dernières sont des fils conducteurs radiaux solidarisés à la thermistance.

Dans ces différentes réalisations connues, la thermistance, ses bornes d'alimentation et le support isolant sont toujours rigidement solidarisés les uns aux autres, de sorte que, placés dans un environnement vibratoire, ils ne peuvent pas toujours être maintenus étroitement en contact avec un organe, par exemple vibrant, dont la température est à mesurer ou contrôler, et fournissent ainsi des mesures erronées, du fait que la thermistance n'est pas en permanence dans une bonne relation d'échanges thermiques avec cet organe.

Par ailleurs, par la demande internationale PCT/GB91/02054, on connait un dispositif de chauffage à coefficient de température positif. Ce dispositif comporte un matériau à coefficient de température positif intercalé entre deux électrodes, de sorte que l'énergie électrique qui le traverse soit dissipée sous forme de chaleur, l'agencement étant cylindrique, afin qu'il puisse s'introduire dans un objet que l'on empoigne, et remédie aux problèmes associés aux dispositifs à enroulement qui sont sujets aux pannes et aux court-circuits.

Mais, pour ces dispositifs de chauffage également, la liaison directe et rigide entre les électrodes et le matériau à coefficient de température positif ne permet pas d'obtenir une bonne relation d'échanges thermiques entre ce dispositif de chauffage et l'organe à chauffer dans lequel il est introduit, lorsque tous deux se trouvent dans un environnement vibratoire. Un tel environnement vibratoire est également très préjudiciable aux connexions électriques entre la thermistance et ses bornes et électrodes d'alimentation. EP-A-0 082 768 décrit un module thermorésistif utilisable comme capteur de température, du type comprenant une thermistance, un support électriquement isolant, deux bornes d'alimentation électriques au moins partiellement montées dans le support en étant électriquement isolées l'une de l'autre, un corps électriquement conducteur et à bonne conductivité thermique, destiné à être mis en relation d'échange thermique avec un milieu dont la température est à mesurer, et qui est monté sur ledit support, ladite thermistance étant disposée entre ledit support et ledit corps conducteur, contre lequel elle est maintenue élastiquement appliquée en butée, en étant elle-même élastiquement maintenue électriquement connectée à une première borne d'alimentation, par des premiers moyens élastiques et ledit corps conducteur étant élastiquement maintenu électriquement connecté à la seconde borne d'alimentation, par des seconds moyens élastiques, électriquement isolés desdits premiers moyens élastiques. Ainsi, le maintien élastique de la résistance contre le corps conducteur garantit de bons échanges thermiques permanents entre ces deux éléments, alors que le maintien élastique de la résistance électriquement connectée aux bornes d'alimentation garantit la continuité de cette alimentation. La fiabilité d'un tel module thermorésistif est donc grandement améliorée.

Cependant, le corps conducteur de ce module connu est rigidement lié au support isolant par soudure des parois latérales de ces deux éléments, car ce module est destiné à mesurer la température d'un milieu liquide dans lequel le corps conducteur doit être plongé. Il en résulte que ce module est inadapté à appliquer le corps conducteur contre un organe solide, tel qu'un corps de carburateur ou de papillon de moteur à combustion, dans de bonnes conditions de contact et d'échanges thermiques, indépendamment des tolérances de fabrication du module et de montage de son support par rapport audit organe solide.

Le but de l'invention est de remédier aux inconvénients précités, et de proposer un module thermorésistif, utilisable comme capteur de température ou comme dispositif de chauffage électrique, et qui, dans ses utilisations, assure non seulement une pérénité de l'alimentation électrique de la résistance, même lorsque les divers composants du module sont soumis à des vibrations ou trépidations, mais permet également d'obtenir de bonnes conditions de contact et d'échanges thermiques, indépendamment des tolérances de fabrication et de montage, lorsque le corps conducteur est appliqué contre un milieu solide, tel qu'un corps de carburateur ou corps de papillon.

Un autre but de l'invention est de proposer un dispositif de chauffage électrique, comprenant un module thermorésistif selon l'invention, et substituable au circuit d'eau de réchauffage qui est prévu dans des corps à conduit d'admission et organe d'étranglement rotatif (papillon) que comprennent des dispositifs de commande de débit d'installations d'alimentations pour moteurs à combustion interne, en particulier des corps de carburateur, pour commander le débit de mélange air/combustible, et dont le pied est souvent traversé par un circuit d'eau de réchauffage, afin d'éviter le givrage.

En effet, on sait que, dans un corps de carburateur, la vaporisation de l'essence absorbe des calories. En cas d'humidité ambiante, ce phénomène d'absorption de calories peut se traduire par un givrage sur l'axe du papillon, à une température comprise entre 0 et 4°C.

En outre, lorsque le corps de carburateur comporte un conduit de recyclage des gaz de carter, avec une partie de section étranglée, des condensats de ces gaz peuvent s'accumuler dans cette partie et gêner le bon fonctionnement du carburateur.

De même, dans les corps de papillon, pour commander le débit d'air dans des installations d'injection monopoint ou multipoints, les démarrages à froid en ambiance humide peuvent conduire à des givrages de l'axe du papillon. De plus, dans ces corps il est souvent prévu un circuit d'alimentation en air en quantité suffisante pour permettre le fonctionnement du moteur au ralenti, ce circuit comportant une dérivation sur le conduit d'admission du corps de papillon, et cette dérivation présentant une portion de section étranglée, dont la section de passage est éventuellement calibrée de manière réglable. Dans des conditions de démarrage à froid, le passage d'air froid à grande vitesse dans cette section étranglée peut également conduire à un givrage, qui peut notamment bloquer les organes de commande du calibrage de cette section étranglée.

Il est clair que la présence d'un circuit d'eau de réchauffage dans un corps de carburateur ou de papillon, pour éviter les problèmes de givrage et/ou vaporiser les condensats des gaz de carter, est une solution coûteuse et encombrante, qui complique la réalisation du corps et pose des problèmes d'étanchéité, de régulation thermique, et de circulation notamment.

Un but de l'invention est de remédier à ces inconvénients des dispositifs de réchauffage connus, en proposant un dispositif de chauffage électrique simple, peu encombrant, économique et ne posant pas de problème de maintenance ni d'entretien.

A cet effet, l'invention propose un module thermorésistif, du type présenté ci-dessus, connu par EP-A-0 082 768, et qui se caractérise en ce que ledit corps conducteur est monté sur ledit support avec un jeu de montage autorisant des déplacements relatifs d'amplitude limitée du corps et du support dans au moins une direction générale de sollicitation desdits moyens élastiques. On obtient ainsi que le corps conducteur soit placé dans de bonnes conditions d'échanges thermiques avec ledit milieu et la thermistance.

Avantageusement de plus, la thermistance est alimentée par une première électrode, reliée à ladite première borne d'alimentation et maintenue élastiquement en contact avec ladite thermistance par lesdits premiers moyens élastiques, et par une seconde électrode, reliée à ladite seconde borne d'alimentation, et élastiquement sollicitée par lesdits seconds moyens élastiques la maintenant électriquement connectée avec ledit corps conducteur, lesdites première et seconde électrodes étant essentiellement logées dans respectivement un premier et un second logements du support isolant, qui sont séparés l'un de l'autre par un écran isolant. Ainsi, que la thermistance soit à CTP ou CTN, on peut obtenir un capteur de température de précision, tandis qu'avec une thermistance à CTP, on peut réaliser un dispositif de chauffage électrique à régulation de température.

Afin d'améliorer encore la continuité d'une bonne alimentation électrique de la thermistance, les première et seconde électrodes de cette dernière sont avantageusement de plus élastiquement maintenues en contact électriquement conducteur contre respectivement la première et la seconde bornes d'alimentation, respectivement par les premiers et les seconds moyens élastiques, qui sont essentiellement logés dans respectivement le premier et le second logements du support.

Dans un mode de réalisation particulièrement avantageux de l'invention, qui permet de simplifier la structure du module, les premiers moyens élastiques sont électriquement conducteurs et constituent ladite première électrode, prenant appui élastiquement, d'une part, contre ladite première borne d'alimentation, en saillie dans ledit premier logement du support, et, d'autre part, contre ladite thermistance, de sorte à maintenir cette dernière constamment en butée contre ledit corps conducteur, et, de manière analogue, les seconds moyens élastiques également sont avantageusement électriquement conducteurs et constituent ladite seconde électrode, qui prend élastiquement appui, d'une part, contre ladite seconde borne d'alimentation, en saillie dans ledit second logement dudit support, et, d'autre part, contre un élément électriquement conducteur qu'elle maintient élastiquement en butée contre ledit corps conducteur, et de sorte que ledit élément électriquement conducteur soit isolé de ladite thermistance.

Selon un exemple préféré de réalisation, l'une au moins des première et seconde électrodes, mais de préférence chacune d'elles, est réalisée sous la forme d'un ressort hélicoïdal de compression électriquement conducteur.

Dans ce cas, afin d'améliorer la compacité du module, il est en outre avantageux que lesdits premier et second logements du support soient délimités de part et d'autre d'une cheminée isolante en saillie sur le fond d'un évidement dudit support, le premier logement, à l'intérieur de la cheminée, étant cylindrique et logeant la première électrode en ressort hélicoïdal, le second logement, annulaire et entourant ladite cheminée, logeant la seconde électrode en ressort hélicoïdal, de sorte que les deux ressorts sont logés l'un dans l'autre en étant isolés l'un de l'autre par la cheminée isolante.

Afin d'obtenir de manière simple le jeu de montage, l'un au moins des deux éléments constitués par le support et le corps conducteur présente, avantageusement, des languettes élastiques munies de griffes à leurs extrémités pour s'encliqueter élastiquement derrière un redan de l'autre élément, avec un jeu d'encliquetage dans la direction générale longitudinale des languettes qui correspond audit jeu de montage. Avantageusement, afin de protéger l'encliquetage, le support comporte une jupe de forme générale sensiblement tronconique, qui entoure au moins partiellement lesdits logements du support et dans laquelle des fentes radiales délimitent des languettes élastiques présentant des griffes en saillie radiale vers l'extérieur et s'encliquetant élastiquement dans une gorge intérieure d'une collerette périphérique dudit corps conducteur.

En outre, le montage et l'utilisation d'un tel module sont facilités si les bornes d'alimentation sont les bornes d'un connecteur électrique intégré au support.

De plus, pour assurer l'étanchéité de ce module dans un évidement d'un organe constituant le milieu à chauffer ou dont la température est à mesurer, le support du module présente de préférence une gorge périphérique externe dans laquelle est retenu un joint torique de maintien de l'étanchéité autour du module en position d'utilisation.

Dans le but précité, l'invention propose également un dispositif de chauffage électrique, comprenant un module thermorésistif tel que présenté ci-dessus, dont la résistance électrique est une thermistance à coefficient de température positif (CTP), en forme de pastille sensiblement cylindrique, et dont le corps conducteur est une semelle métallique formant radiateur, de forme générale cylindrique, présentant, dans sa face plane tournée vers le support, un logement dans lequel la thermistance est retenue espacée dudit support.

Avantageusement dans ce cas, le logement de la semelle est au moins partiellement entouré d'un épaulement de la semelle, contre lequel est maintenu en butée ledit élément électriquement conducteur, en forme de plaque annulaire d'appui de ladite seconde électrode, chacune desdites bornes d'alimentation étant également annulaire et élastiquement repoussée contre le fond du logement correspondant du support par les moyens élastiques correspondants, de façon à obtenir un appui élastique équilibré sur la thermistance, en position centrale, et sur la plaque annulaire d'appui, à la périphérie.

L'invention a également pour objet une application du dispositif de chauffage électrique, tel que défini ci-dessus, qui consiste à réchauffer un corps à conduit d'admission contenant un organe d'étranglement rotatif d'un dispositif de commande de débit pour installation d'alimentation de moteur à combustion interne, en montant ledit dispositif de chauffage par son support sur ledit corps à conduit d'admission, de sorte que ladite semelle soit élastiquement appliquée contre une zone à réchauffer dudit corps à conduit d'admission.

Lorsque le corps à réchauffer est un corps de carburateur ou corps de papillon avec conduit de recyclage des gaz du carter, dont une partie de conduit présente une section étranglée, cette application peut consister en ce que le dispositif de chauffage est monté de sorte que sa semelle soit élastiquement appliquée contre ladite partie de conduit de section étranglée.

De même, lorsque le corps à réchauffer est un corps de papillon, pour commander le débit d'air dans une installation d'injection, avec un circuit de ralenti comprenant une dérivation sur le conduit d'admission pour le passage d'un débit d'air de fonctionnement du moteur au ralenti, ou lorsque le corps est celui d'un carburateur avec dérivation sur le conduit d'admission pour le passage d'un complément d'air au moteur, ladite dérivation présentant, dans ledit corps, une zone de calibrage de section rétrécie, l'application selon l'invention peut consister en ce que le dispositif de chauffage est monté sur le corps de sorte que sa semelle soit appliquée élastiquement contre ladite zone de calibrage.

L'invention sera mieux comprise, et d'autres avantages et caractéristiques de l'invention ressortiront à la lecture donnée ci-dessous, à titre non limitatif, d'exemples de réalisations décrits en référence aux dessins annexés sur lesquels :
- la figure 1 est une vue en coupe partielle d'un dispositif de chauffage électrique comportant un module thermorésistif et monté dans un évidement d'un organe à chauffer,
- la figure 2 est une vue analogue à la figure 1 d'une variante de réalisation du dispositif de chauffage, et
- la figure 3 est une vue schématique et partiellement en coupe d'un corps à conduit d'admission et organe d'étranglement rotatif d'un dispositif de commande de débit pour installation d'alimentation de moteur à combustion interne, et sur lequel est monté au moins un dispositif de chauffage selon l'une des figures 1 et 2.

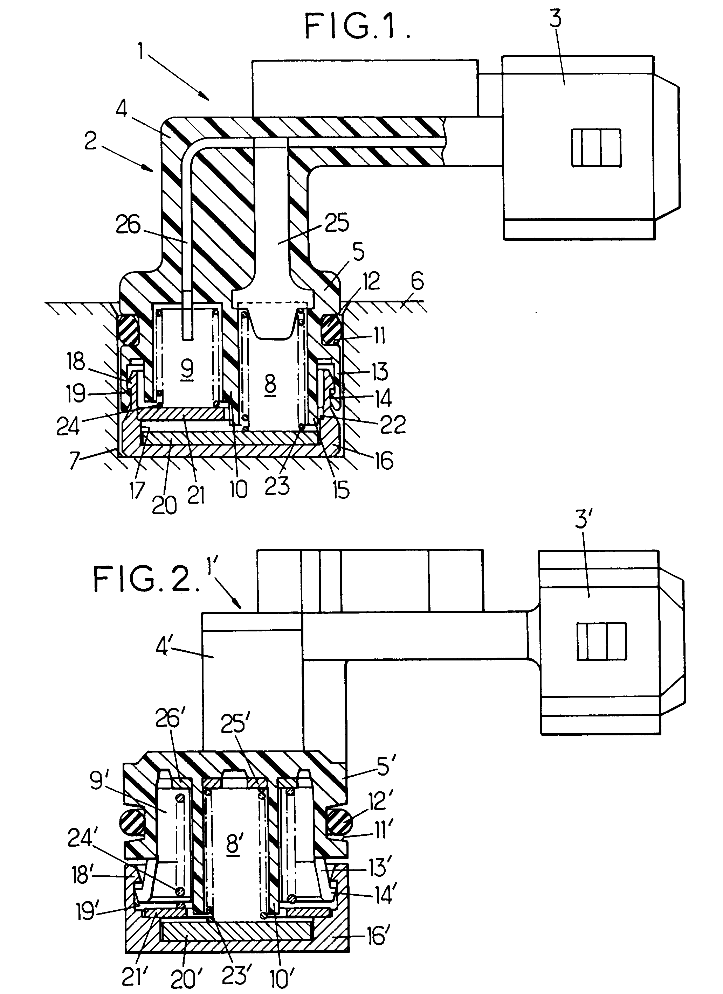

Le dispositif de chauffage électrique 1 de la figure 1 comprend un module thermorésistif 2, auquel est intégré un connecteur électrique 3, à deux bornes de connexion, et d'un type bien connu, utilisé pour le branchement de composants dans les circuits électriques d'automobile.

Le module thermorésistif 2 comprend un support électriquement isolant 4, par exemple en un matériau thermoplastique, tel qu'un polyamide, chargé de fibres de renfort en verre. A son extrémité située du côté opposé à celle par laquelle il est intégré au connecteur 3, le support isolant 4 présente un embout cylindrique 5, par lequel le dispositif de chauffage 1 est engagé dans un évidement 7, de forme cylindrique correspondante, ménagé dans un organe 6 à chauffer, ou dont la température est à mesurer, si le module thermorésistif 2 est utilisé comme capteur de température d'un dispositif de détection et de contrôle de température. L'embout cylindrique 5 se présente comme un capot ouvert à son extrémité tournée vers le fond de l'évidement 7 de l'organe 6, et tel que son évidement interne est subdivisé en deux logements adjacents 8 et 9, séparés l'un de l'autre par un écran isolant 10 s'étendant selon un plan sensiblement diamétral dans l'évidement central de l'embout 5. La face latérale externe de ce dernier présente une gorge périphérique 11, de section transversale sensiblement rectangulaire, dans laquelle est retenu un joint d'étanchéité torique 12 compressible, par exemple en caoutchouc ou élastomère. Au-delà de la gorge ou rainure 11, la face latérale externe de l'embout 5 se prolonge par une jupe externe, annulaire et cylindrique qui est subdivisée en languettes axiales 13 par des fentes radiales, régulièrement réparties en direction circonférentielle, et ménagées dans cette jupe externe, et chacune des languettes axiales élastiques 13 ainsi délimitée présente, à son extrémité libre, une griffe 14 en saillie radiale vers l'intérieur. Les languettes élastiques 13 entourent, avec un espacement radial, une jupe axiale interne 15 qui, avec l'écran isolant diamétral 10, délimite les deux logements 8 et 9 de sorte que le logement 9 soit sensiblement moins profond, axialement, que le logement 8. L'extrémité ouverte de l'embout 5 du support isolant 4 est fermée par une semelle de radiateur 16, électriquement conductrice et ayant une bonne conductivité thermique, par exemple une semelle métallique en laiton ou aluminium. Cette semelle 16, de forme générale externe cylindrique de section circulaire, présente un logement interne 17, de même forme, et se prolonge par une collerette axiale 18, dont l'extrémité libre est extérieurement chanfreinée, et dont la face latérale externe présente une gorge périphérique 19, ayant une largeur, en direction axiale, qui est supérieure à la dimension axiale des griffes 14, dont le dos est intérieurement chanfreiné, pour coopérer avec l'extrémité chanfreinée de la collerette 18 pour la fixation de la semelle 16 par encliquetage élastique sur le support isolant 4. Cet encliquetage élastique est obtenu en introduisant axialement la collerette 18 de la semelle 16 dans l'espace annulaire délimité sur l'embout 5 entre les languettes élastiques 13 et la jupe interne 15. Cette introduction provoque tout d'abord un écartement élastique radialement vers l'extérieur des languettes 13, qui se resserrent radialement vers l'intérieur lorsque leurs griffes 14 peuvent s'engager dans la gorge périphérique 19 de la semelle 16. La dimension axiale de la gorge 19 est supérieure à la dimension axiale des griffes 14, de même que la dimension axiale des languettes 13, entre leur base et leurs griffes 14, est supérieure à la dimension axiale de la partie de collerette 18, ou redan, retenue derrière lesdites griffes 14, de sorte que la semelle 16 est fixée à l'embout cylindrique 5 du support isolant 4 avec un jeu de montage, selon l'axe de l'embout 5, qui est un jeu d'encliquetage. Mais avant le montage de la semelle 16 sur le support 4, qui intervient lui-même avant le montage du dispositif de chauffage 1 sur l'organe 6 à chauffer, une thermistance à CTP 20, en forme de pastille cylindrique, est logée au fond du logement 17 de la semelle 16, et une plaque d'appui 21, électriquement conductrice, par exemple en bronze ou en acier traité ou inoxydable, est appliquée par sa périphérie contre un épaulement 22, ménagé dans la semelle 16 autour de son logement 17, et la profondeur axiale du logement 17 et les dimensions de la plaque 21 sont telles que cette plaque 21 ne s'étend, radialement dans la semelle 16, qu'en regard du logement 9 de l'embout 5, entre la base de la collerette 18 et un décrochement dans l'écran isolant central 10, et en étant axialement espacés de la thermistance 20, et donc sans contact avec elle. La thermistance 20 et la plaque 21 sont également axialement espacées de la jupe 15 et de l'écran isolant 10 de l'embout 5, dans une mesure qui correspond au jeu de montage de la semelle 16 sur l'embout 5. Dans chacun des logements 8 et 9 est disposé un ressort hélicoïdal de compression 23 ou 24, électriquement conducteur, par exemple réalisé en acier inoxydable ou en bronze, et qui constitue simultanément l'une des deux électrodes d'alimentation de la thermistance 20. Le ressort 23, dans le logement 8, prend élastiquement appui, par une extrémité, contre la thermistance 20, en maintenant simultanément cette dernière appliquée élastiquement en butée contre la semelle 16, tandis que par son autre extrémité, le ressort 23 prend élastiquement appui contre une extrémité, en saillie dans le logement 8, de l'une 25 des deux bornes d'alimentation 25 et 26 du connecteur intégré 3, ces bornes 25 et 26 étant réalisées sous la forme de languettes métalliques, électriquement conductrices, par exemple en laiton étamé, qui sont chacune partiellement noyée et ancrée dans le support isolant 4, par surmoulage lors de la fabrication de ce dernier. De manière analogue, le ressort 24 logé dans le logement 9 prend élastiquement appui par une extrémité contre la partie, en saillie dans ce logement 9, de l'autre borne d'alimentation 26, et, par son autre extrémité, ce ressort 24 maintient la plaque 21 élastiquement appliquée en butée contre l'épaulement 22 de la semelle 16.

Ainsi, le ressort 23 constitue simultanément une électrode d'alimentation de la thermistance 20, reliant cette dernière à la borne d'alimentation 25, et des moyens élastiques qui, d'une part, maintiennent élastiquement la thermistance 20 en butée contre la semelle 16, et, d'autre part, assurent élastiquement la liaison électrique entre la thermistance 20 et la borne 25. De même, le ressort 24 constitue simultanément la seconde électrode, reliant la thermistance 20 à la borne 26 par l'intermédiaire de la semelle 16 et de la plaque d'appui 21, qui sont conductrices, et des moyens élastiques de maintien en butée de la plaque d'appui 21 contre la semelle 16 et de maintien de la liaison électrique entre la semelle 16, la plaque 21 et la borne 26. Lorsque le dispositif de chauffage 1 est monté sur l'organe à chauffer 6, par exemple par une vis (non représentée) traversant le support 4 et vissée dans l'organe 6, et engagé dans l'évidement 7 de ce dernier avec étanchéité par l'effet du joint torique compressible 12, la semelle 16, grâce à son jeu de montage axial sur le support isolant 4, est également élastiquement appliquée par les deux ressorts 23 et 24 contre le fond de l'évidement 7, et donc dans d'excellentes conditions d'échange thermique avec l'organe à chauffer 6.

On obtient ainsi un dispositif de réchauffage à régulation de température, puisque la variation de la résistance électrique de la thermistance à CTP, en fonction de la température de l'organe à réchauffer 6, permet de moduler la puissance de chauffage diffusée.

La variante de dispositif de réchauffage représentée sur la figure 2 comporte de nombreux éléments analogues à ceux du dispositif de la figure 1, et qui sont repérés par les mêmes références, affectées d'un symbole prime, et l'on se contente de décrire ci-dessous les différences essentielles présentées par le dispositif de chauffage électrique 1' de la figure 2 par rapport à celui qui vient d'être décrit.

Pour obtenir une meilleure compacité, l'écran isolant entre les deux logements contenant les ressorts conducteurs est réalisé par une cheminée 10' axiale, en saillie sur le fond de l'évidement de l'embout 5' du support isolant 4', cette cheminée 10' étant sensiblement cylindrique de section circulaire et délimitant, en son intérieur, le logement 8' dans lequel se trouve le ressort hélicoïdal de compression et conducteur 23', dont une extrémité est en appui élastique contre la partie centrale de la face plane en regard de la résistance à CTP 20', et maintient celle-ci élastiquement en butée contre le fond du logement de la semelle 16', tandis que son autre extrémité est en appui élastique contre la partie d'une borne d'alimentation du connecteur intégré 3' qui fait saillie dans ce logement 8', et qui est, dans cet exemple, une extrémité annulaire 25' élastiquement appliquée contre le fond de l'évidement de l'embout isolant 5', avec un bon contact électriquement conducteur contre la spire d'appui à l'extrémité correspondant du ressort 23'. L'autre logement 9' est un logement annulaire délimité radialement autour de la cheminée 10', dans l'embout 5' de forme générale cylindrique, et ce logement 9' reçoit le ressort 24' qui, de manière analogue, est élastiquement en appui par une spire d'extrémité contre la partie d'extrémité annulaire 26' de l'autre borne du connecteur intégré 3', qui fait saillie dans ce logement 9', et est appliquée élastiquement autour de la cheminée 10' contre le fond de l'évidement de l'embout 5'. L'autre spire d'extrémité du ressort 24' est élastiquement en appui contre la plaque conductrice 21', en forme de rondelle annulaire en appui, sur toute sa périphérie, contre l'épaulement de la semelle 16' entourant le logement de cette dernière, de sorte à maintenir la rondelle 21' élastiquement en butée contre la semelle 16', avec espacement axial vis-à-vis de la thermistance 20'. Cette dernière et la rondelle d'appui 21' sont chacune espacées des parties en regard du support isolant 4' en raison du jeu de montage par encliquetage de la semelle 16' sur l'embout 5'.

Dans cet exemple, les languettes élastiques 13' sont délimitées par des fentes radiales dans une jupe de forme sensiblement tronconique qui s'évase autour de l'extrémité ouverte de l'embout 5', et les languettes 13' présentent, à leur extrémité, des griffes 14' en saillie radiale vers l'extérieur. Ces griffes 14' sont élastiquement encliquetées dans une gorge périphérique interne 19' présentée par la collerette cylindrique 18' qui prolonge axialement la surface latérale externe cylindrique de la semelle 16'. Enfin, pour l'étanchéité du dispositif 1' monté sur un organe à réchauffer, on retrouve un joint torique compressible 12' retenu dans une gorge périphérique externe 11' de la partie de l'embout 5' qui supporte les languettes 13'.

Ce dispositif 1' de chauffage électrique avec régulation de température fonctionne de la même façon que celui de la figure 1, par rapport auquel il présente les avantages d'une meilleure compacité, d'un meilleur équilibrage et guidage des efforts mécaniques et de meilleures liaisons électriques entre les ressorts et les bornes d'alimentation, en raison essentiellement du montage des deux ressorts coaxiaux l'un dans l'autre et séparés par la cheminée isolante 10', et de la forme annulaire des extrémités 25' et 26' des bornes d'alimentation, ainsi que de la plaque d'appui 21'.

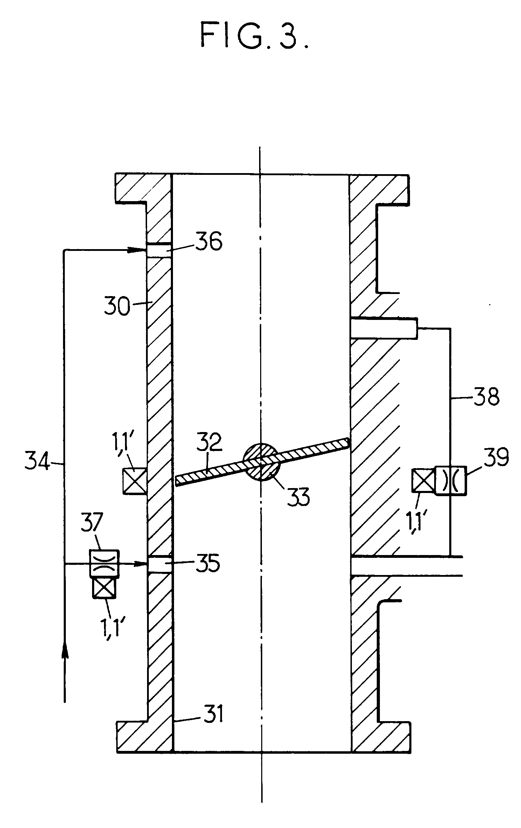

La figure 3 représente partiellement, schématiquement et en partie en coupe, un dispositif de commande de débit d'une installation d'alimentation de moteur à combustion interne. Ce dispositif comprend un corps 30, dans lequel est ménagé un conduit d'admission 31. Un organe d'étranglement rotatif 32, appelé papillon, est porté par un axe 33 monté en rotation dans le conduit 31 et actionné par le conducteur. Sur la moitié de gauche de la figure 3, on suppose que le corps 30 est celui d'un carburateur, pour commander le débit de mélange air/combustible du moteur. Un conduit 34 de recyclage des gaz de carter est ménagé, sur une partie de sa longueur, dans l'épaisseur du corps 30 et débouche dans le conduit 31 de ce dernier par les passages 35 et 36, de part et d'autre du papillon 32. Sur la branche du conduit 34 qui débouche en 35, ce conduit 34 présente une partie de section étranglée 37, qui est parcourue par les condensats des gaz de carter recyclés. En substitution au circuit d'eau de réchauffage aménagé dans le pied de certains carburateurs, afin d'éviter le givrage, notamment au niveau de l'axe 33 de rotation du papillon 32, le corps 30 de carburateur de la partie gauche de la figure 3 est équipé d'un dispositif de réchauffage électrique à CTP 1 ou 1' selon la figure 1 ou 2, qui est monté dans ce corps 30, comme indiqué sur la figure 1. Le dispositif de chauffage 1, 1' réchauffe ainsi directement la masse du corps 30, par appui élastique de sa semelle 16 ou 16' contre ce corps à proximité de l'axe 33 du papillon 32. Mais le dispositif de chauffage 1, 1' peut également être monté sur le corps 30 avec appui élastique de sa semelle 16 ou 16' à proximité immédiate de la partie de section rétrécie 37 du conduit 34, afin de réchauffer et d'évacuer vers le conduit 31 les condensats des gaz de carter recyclés.

Sur la moitié de droite de la figure 3, on considère que le corps 30 est un corps de papillon d'un dispositif de commande du débit d'air d'une installation d'injection monopoint ou multipoints de moteur à combustion interne. Lorsque le moteur est au ralenti, le papillon 32 occupe la position montrée sur la figure 3 et obture sensiblement le conduit 31. L'air nécessaire au fonctionnement du moteur au ralenti circule par un conduit 38, ménagé dans le corps 30 et débouchant dans son conduit 31 de part et d'autre du papillon 32. Ce conduit 38 d'amenée d'air en dérivation sur le papillon 32 peut comporter une zone de section calibrée 39 comportant une vanne de calibrage pilotée en fonction de la vitesse du moteur au ralenti, afin de régler le débit d'air de ralenti passant par le conduit 38. Dans ce cas, le corps de papillon 30 peut être réchauffé directement au niveau de l'axe 33 du papillon 32, comme indiqué en 1, 1' sur la partie gauche de la figure 3, ou encore le dispositif de chauffage 1, 1' peut être monté sur le corps 30 de manière à réchauffer ce dernier par sa semelle 16, 16' en appui élastique au niveau de la zone de section calibrée 39 du conduit 38. Afin d'éviter les phénomènes de givrage, qui se produisent, d'une manière générale, au niveau des parties ayant les sections les plus rétrécies des différents conduits du corps, c'est-à-dire aux endroits où la vitesse de circulation de l'air ou de l'air carburé est la plus grande, le ou les dispositifs de chauffage sont montés de sorte que leur semelle chauffante soit appliquée élastiquement contre ces parties de conduits de section la plus rétrécie.

Enfin, il est à noter que le conduit 38 peut être ménagé dans un corps de carburateur, pour fournir un complément d'air au moteur. De même, le conduit 34 peut être ménagé dans un corps de papillon, pour le recyclage des gaz de carter ou "Blow-by". Dans ces cas, il est avantageux de monter le dispositif de chauffage électrique sur le corps de carburateur ou de papillon, de sorte que ces conduits soient également réchauffés dans leurs parties de plus faible section.

L'ensemble du corps de papillon ou de carburateur est, de préférence, réalisé de sorte qu'un unique dispositif de chauffage 1 ou 1' est implanté sur le corps 30 en étant simultanément à proximité du papillon 32, de la partie de section rétrécie 37 et de la zone de section calibrée 39 des conduits 34 et 38 respectivement.

## Revendications

1. Module thermorésistif, utilisable comme capteur de température ou dispositif de chauffage électrique (1, 1'), comprenant une thermistance (20, 20'), un support électriquement isolant (4, 4'), deux bornes d'alimentation électrique (25, 26 ; 25', 26'), au moins partiellement montées dans ledit support, en étant électriquement isolées l'une de l'autre, un corps électriquement conducteur et à bonne conductivité thermique (16, 16'), destiné à être mis en relation d'échange thermique avec un milieu à chauffer (6, 30, 37, 39) ou dont la température est à mesurer, et qui est monté sur ledit support (4, 4'), ladite thermistance (20, 20') étant disposée entre ledit support (4, 4') et ledit corps conducteur (16, 16'), contre lequel elle est maintenue élastiquement appliquée en butée, en étant elle-même élastiquement maintenue électriquement connectée à une première borne d'alimentation (25, 25'), par des premiers moyens élastiques (23, 23'), ledit corps conducteur (16, 16') étant élastiquement maintenu électriquement connecté à la seconde borne d'alimentation (26, 26'), par des seconds moyens élastiques (24, 24'), électriquement isolés (10, 10') desdits premiers moyens élastiques (23, 23'), caractérisé en ce que ledit corps conducteur (16, 16') est monté sur ledit support (4, 4') avec un jeu de montage autorisant des déplacements relatifs d'amplitude limitée du corps et du support dans au moins une direction générale de sollicitation desdits moyens élastiques (23, 24 ; 23', 24').

2. Module thermorésistif selon la revendication 1, caractérisé en ce que ladite thermistance (20,20') est alimentée par une première électrode (23, 23'), reliée à ladite première borne d'alimentation (25, 25') et maintenue élastiquement en contact avec ladite thermistance (20, 20') par lesdits premiers moyens élastiques (23, 23'), et par une seconde électrode (24,24'), reliée à ladite seconde borne d'alimentation (26, 26'), et élastiquement sollicitée par lesdits seconds moyens élastiques (24, 24') la maintenant électriquement connectée avec ledit corps conducteur (16, 16'), lesdites première et seconde électrodes (23, 24 ; 23', 24') étant essentiellement logées dans respectivement un premier (8, 8') et un second logements (9, 9') du support isolant (4, 4'), qui sont séparés l'un de l'autre par un écran isolant (10, 10').

3. Module thermorésistif selon la revendication 2, caractérisé en ce que lesdites première (23, 23') et seconde électrodes (24, 24') sont élastiquement maintenues en contact électriquement conducteur contre respectivement la première (25, 25') et la seconde bornes (26, 26') d'alimentation, respectivement par les premiers (23, 23') et les seconds moyens élastiques (24, 24'), qui sont essentiellement logés dans respectivement le premier (8, 8') et le second logements (9, 9') du support (4, 4').

4. Module thermorésistif selon la revendication 3, caractérisé en ce que lesdits premiers moyens élastiques (23, 23') sont électriquement conducteurs et constituent ladite première électrode, prenant appui élastiquement, d'une part, contre ladite première borne d'alimentation (25, 25'), en saillie dans ledit premier logement (8, 8') du support (4, 4'), et, d'autre part, contre ladite thermistance (20, 20'), de sorte à maintenir cette dernière constamment en butée contre ledit corps conducteur (16, 16').

5. Module thermorésistif selon l'une des revendications 3 et 4, caractérisé en ce que lesdits seconds moyens élastiques (24, 24') sont électriquement conducteurs et constituent ladite seconde électrode, qui prend élastiquement appui, d'une part, contre ladite seconde borne d'alimentation (26, 26'), en saillie dans ledit second logement (9, 9') dudit support (4, 4'), et, d'autre part, contre un élément électriquement conducteur (21, 21') qu'elle maintient élastiquement en butée contre ledit corps conducteur (16, 16'), et de sorte que ledit élément électriquement conducteur (21, 21') soit isolé de ladite thermistance (20, 20').

6. Module thermorésistif selon l'une des revendications 4 et 5, caractérisé en ce que l'une au moins desdites première et seconde électrodes (23, 24 ; 23', 24') est réalisée sous la forme d'un ressort hélicoïdal de compression électriquement conducteur.

7. Module thermorésistif selon la revendication 6, caractérisé en ce que lesdits premier et second logements (8', 9') du support (4') sont délimités de part et d'autre d'une cheminée isolante (10') en saillie sur le fond d'un évidement dudit support (4'), le premier logement (8'), à l'intérieur de la cheminée (10'), étant cylindrique et logeant la première électrode en ressort hélicoïdal (23'), le second logement (9'), annulaire et entourant ladite cheminée (10'), logeant la seconde électrode en ressort hélicoïdal (24'), de sorte que les deux ressorts soient logés l'un dans l'autre en étant isolés l'un de l'autre par la cheminée isolante.

8. Module thermorésistif selon l'une des revendications 1 à 7, caractérisé en ce que l'un au moins des deux éléments constitués par le support (4, 4') et le corps conducteur (16, 16') présente des languettes élastiques (13, 13'), munies de griffes (14, 14') à leurs extrémités pour s'encliqueter élastiquement derrière un redan (18, 18') de l'autre élément, avec un jeu d'encliquetage dans la direction générale longitudinale des languettes (13, 13') qui correspond audit jeu de montage.

9. Module thermorésistif selon la revendication 8, caractérisé en ce que ledit support (4') comporte une jupe de forme générale sensiblement tronconique, qui entoure au moins partiellement lesdits logements (8', 9') du support et dans laquelle des fentes radiales délimitent des languettes élastiques (13') présentant des griffes (14') en saillie radiale vers l'extérieur et s'encliquetant élastiquement dans une gorge intérieure (19') d'une collerette périphérique (18') dudit corps conducteur (16').

10. Module thermorésistif selon l'une des revendications 1 à 9, caractérisé en ce que lesdites bornes d'alimentation (25, 26 ; 25', 26') sont les bornes d'un connecteur électrique (3, 3') intégré audit support (4, 4').

11. Module thermorésistif selon l'une des revendications 1 à 10, caractérisé en ce que ledit support (4, 4') présente une gorge périphérique externe (11, 11') dans laquelle est retenu un joint torique (12, 12') d'étanchéité.

12. Dispositif de chauffage électrique (1, 1'), caractérisé en ce qu'il comprend un module thermorésistif selon l'une des revendications 1 à 12, dont la thermistance (20, 20') est à coefficient de température positif (CTP), en forme de pastille sensiblement cylindrique, et dont le corps conducteur (16, 16') est une semelle métallique formant radiateur, de forme générale cylindrique, présentant, dans sa face plane tournée vers le support (4, 4'), un logement (17) dans lequel la thermistance (20, 20') est retenue espacée dudit support (4, 4').

13. Dispositif de chauffage (1') selon la revendication 12, comportant un module thermorésistif selon la revendication 5, caractérisé en ce que ledit logement de la semelle (16') est au moins partiellement entouré d'un épaulement de la semelle, contre lequel est maintenu en butée ledit élément électriquement conducteur, en forme de plaque annulaire (21') d'appui de ladite seconde électrode (24'), chacune desdites bornes d'alimentation (25', 26') étant également annulaire et élastiquement repoussée contre le fond du logement correspondant (8', 9') du support (4') par les moyens élastiques correspondants (23', 24').

14. Application du dispositif de chauffage électrique (1, 1') selon l'une des revendications 12 et 13 précédentes, caractérisée en ce qu'elle consiste à réchauffer un corps (30) à conduit d'admission (31) contenant un organe d'étranglement rotatif (32) d'un dispositif de commande de débit pour installation d'alimentation de moteur à combustion interne, en montant ledit dispositif de chauffage (1, 1') par son support (4, 4') sur ledit corps (30) à conduit d'admission (31), de sorte que ladite semelle (16, 16') soit élastiquement appliquée contre une zone à réchauffer dudit corps (30) à conduit d'admission (31).

15. Application selon la revendication 14, caractérisée en ce que le corps (30) à réchauffer est un corps de carburateur ou de papillon avec conduit (34) de recyclage des gaz de carter, dont une partie de conduit présente une section étranglée (37), et en ce que le dispositif de chauffage (1, 1') est monté de sorte que sa semelle (16, 16') soit appliquée contre ladite partie de conduit de section étranglée (37).

16. Application selon la revendication 14, caractérisée en ce que le corps (30) à réchauffer est un corps de papillon, pour commander le débit d'air dans une installation d'injection, avec un circuit de ralenti comprenant une dérivation (38) sur le conduit d'admission (31) pour le passage d'un débit d'air de fonctionnement du moteur au ralenti, ou un corps de carburateur avec dérivation de passage d'un supplément d'air au moteur, ladite dérivation (38) présentant, dans ledit corps (30) de papillon, une zone de calibrage (39) de section rétrécie, et en ce que le dispositif de chauffage (1, 1') est monté sur le corps (30) de sorte que sa semelle (16, 16') soit appliquée élastiquement contre ladite zone de calibrage (39).

## Patentansprüche

1. Thermowiderstandsmodul, das als Temperaturmeßfühler oder elektrische Heizvorrichtung (1, 1') einsetzbar ist und einen Thermistor (20, 20'), einen elektrischen Stützisolator (4, 4'), zwei elektrische Anschlußklemmen (25, 26 ; 25', 26') aufweist, die mindestens teilweise in dem Stützisolator angebracht sind, wobei sie voneinander elektrisch isoliert sind, ein elektrisch leitendes Gehäuse (16, 16') mit guter spezifischer Wärmeleitfähigkeit, das dazu bestimmt ist, in Wärmeaustauschbeziehung mit einem zu beheizenden Milieu (6, 30, 37, 39) gebracht zu werden oder dessen Temperatur zu messen ist und das auf dem Stützisolator (4, 4') angebracht ist, wobei der Thermistor (20, 20') zwischen dem Stützisolator (4, 4') und dem leitenden Gehäuse (16, 16') angeordnet ist, gegen das er im Anschlag elastisch aufgedrückt ist, wobei er selbst elastisch gehalten mit einer ersten Anschlußklemme (25, 25') mittels erster elastischer Mittel (23, 23') elektrisch verbunden ist, wobei das leitende Gehäuse (16, 16') elastisch gehalten mit der zweiten Anschlußklemme (26, 26') mittels zweiter elastischer Mittel (24, 24') elektrisch verbunden ist, die elektrisch isoliert (10, 10') von den ersten elastischen Mitteln (23, 23') sind,
dadurch gekennzeichnet, daß das leitende Gehäuse (16, 16') auf dem Stützisolator (4, 4') mit einem Montagespiel angebracht ist, das relative Verschiebungen begrenzter Amplitude des Gehäuses und des Stützisolators in mindestens einer Hauptbeanspruchungsrichtung der elastischen Mittel (23, 24 ; 23', 24') gestattet.

2. Thermowiderstandsmodul nach Anspruch 1,
dadurch gekennzeichnet, daß der Thermistor (20, 20') mittels einer ersten Elektrode (23, 23') gespeist ist, die mit der ersten Anschlußklemme (25, 25') verbunden und mit dem Thermistor (20, 20') mittels der ersten elastischen Mittel (23, 23') elastisch in Kontakt gehalten ist und mittels einer zweiten Elektrode (24, 24'), die mit der zweiten Anschlußklemme (26, 26') verbunden ist und durch die zweiten elastischen Mittel (24, 24') elastisch beansprucht wird, die sie mit dem leitenden Gehäuse (16, 16') elektrisch verbunden halten, wobei die erste und zweite Elektrode (23, 24 ; 23', 24') im wesentlichen in einer ersten (8, 8') bzw. einer zweiten Lageranordnung (9, 9') des Stützisolators (4, 4') gelagert sind, die voneinander mittels eines isolierenden Schirms (10, 10') getrennt sind.

3. Thermowiderstandsmodul nach Anspruch 2,
dadurch gekennzeichnet, daß die erste (23, 23') und zweite Elektrode (24, 24') in elektrisch leitendem Kontakt gegen die erste (25, 25') bzw. die zweite (26, 26') Anschlußklemme, mittels der ersten (23, 23') bzw. der zweiten (24, 24') elastischen Mittel elastisch gehalten sind, die im wesentlichen in der ersten (8, 8') bzw. der zweiten (9, 9') Lageranordnung des Stützisolators (4, 4') gelagert sind.

4. Thermowiderstandsmodul nach Anspruch 3,
dadurch gekennzeichnet, daß die ersten elastischen Mittel (23, 23') elektrisch leitend sind und die erste Elektrode bilden, wobei sie einerseits gegen die erste Anschlußklemme (25, 25') vorspringend in der ersten Lageranordnung (8, 8') des Stützisolators (4, 4') und andererseits gegen den Thermistor (20, 20') derart elastisch zur Anlage kommen, daß letztgenannter konstant gegen das leitende Gehäuse (16, 16') im Anschlag gehalten ist.

5. Thermowiderstandsmodul nach Anspruch 3 oder 4,
dadurch gekennzeichnet, daß die zweiten elastischen Mittel (24, 24') elektrisch leitend sind und die zweite Elektrode bilden, die einerseits gegen die zweite Anschlußklemme (26, 26') vorspringend in der zweiten Lageranordnung (9, 9') des Stützisolators (4, 4') und andererseits gegen ein elektrisch leitendes Element (21, 21') elastisch zur Anlage kommt, das sie gegen das leitende Gehäuse (16, 16') elastisch im Anschlag hält, und derart, daß das elektrisch leitende Element (21, 21') von dem Thermistor (20, 20') isoliert ist.

6. Thermowiderstandsmodul nach Anspruch 4 oder 5,
dadurch gekennzeichnet, daß mindestens eine der ersten oder zweiten Elektroden (23, 24 ; 23', 24') in der Form einer Druckschraubenfeder ausgeführt ist, die elektrisch leitend ist.

7. Thermowiderstandsmodul nach Anspruch 6,
dadurch gekennzeichnet, daß die erste und zweite Lageranordnung (8', 9') des Stützisolators (4') beiderseits eines isolierenden Stutzens (10') abgegrenzt sind, der auf dem Boden einer Vertiefung des Stützisolators (4') vorspringt, wobei die erste Lageranordnung (8') im Innern des Stutzens (10') zylindrisch ist und die erste Elektrode als Schraubenfeder (23') lagert, die zweite Lageranordnung (9') ringförmig ist und den Stutzen (10') umgibt und die zweite Elektrode als Schraubenfeder (24') derart lagert, daß die beiden Federn ineinander gelagert sind, wobei sie voneinander mittels des isolierenden Stutzens isoliert sind.

8. Thermowiderstandsmodul nach einem der Ansprüche 1 bis 7,
dadurch gekennzeichnet, daß mindestens das eine der beiden mittels des Stützisolators (4, 4') und des leitenden Gehäuses (16, 16') gebildeten Elemente elastische Zungen (13, 13') aufweist, die an ihren Enden mit Haken (14, 14') versehen sind, um hinter einem Absatz (18, 18') des anderen Elements elastisch einzurasten, mit einem Verrastungsspiel in der Längshauptrichtung der Zungen (13, 13'), das dem Montagespiel entspricht.

9. Thermowiderstandsmodul nach Anspruch 8,
dadurch gekennzeichnet, daß der Stützisolator (4') eine Verkleidung von allgemein im wesentlichen kegelstumpfartiger Form aufweist, die mindestens teilweise die Lageranordnungen (8', 9') des Stützisolators umgibt und in der radiale Schlitze elastische Zungen (13') abgrenzen, die Haken (14') radial nach außen vorspringend aufweisen und in einer inneren Kehle (19') eines peripheren Flansches (18') des leitenden Gehäuses (16') elastisch einrasten.

10. Thermowiderstandsmodul nach einem der Ansprüche 1 bis 9,
dadurch gekennzeichnet, daß die Anschlußklemmen (25, 26 ; 25', 26') die Anschlüsse eines in dem Stützisolator (4, 4') integrierten elektrischen Verbinders (3, 3') sind.

11. Thermowiderstandsmodul nach einem der Ansprüche 1 bis 10,
dadurch gekennzeichnet, daß der Stützisolator (4, 4') eine äußere periphere Kehle (11, 11') aufweist, in der ein Runddichtring (12, 12') gehalten ist.

12. Elektrische Heizvorrichtung (1, 1'),
dadurch gekennzeichnet, daß sie ein Thermowiderstandsmodul nach einem der Ansprüche 1 bis 12 aufweist, dessen Thermistor (20, 20') einen positiven Temperaturkoeffizienten (PTC) in Form einer im wesentlichen zylindrischen Scheibe hat, und dessen leitendes Gehäuse (16, 16') eine Metallsohle ist, die einen Heizer allgemeiner zylindrischer Form bildet, der an seiner ebenen, zum Stützisolator (4, 4') gerichteten Seite eine Lageranordnung (17) aufweist, in der der Thermistor (20, 20') von dem Stützisolator (4, 4') beabstandet gehalten ist.

13. Heizvorrichtung (1') nach Anspruch 12, aufweisend ein Thermowiderstandsmodul nach Anspruch 5,
dadurch gekennzeichnet, daß die Lageranordnung der Sohle (16') mindestens teilweise von einer Schulter der Sohle umgeben ist, gegen die das elektrisch leitende Element im Anschlag gehalten wird in Form einer ringförmigen Lagerplatte (21') der zweiten Elektrode, wobei eine jede der Anschlußklemmen (25', 26') auch ringförmig und elastisch gegen den Boden der entsprechenden Lageranordnung (8', 9') des Stützisolators (4') mittels der entsprechenden elastischen Mittel (23', 24') gedrückt ist.

14. Verwendung der elektrischen Heizvorrichtung (1, 1') nach Anspruch 12 oder 13,
dadurch gekennzeichnet, daß sie darin besteht, ein Gehäuse (30) mit Einlaßleitung (31) zu beheizen, die ein Rotationsdrosselorgan (32) einer Durchflußregelvorrichtung für eine Brennkraftmaschinenversorgungsanlage aufweist, indem die Heizvorrichtung (1, 1') mittels ihres Stützisolators (4, 4') auf dem Gehäuse (30) mit Einlaßleitung (31) derart angebracht ist, daß die Sohle (16, 16') gegen eine zu beheizende Zone des Gehäuses (30) mit Einlaßleitung (31) elastisch gedrückt ist.

15. Anwendung nach Anspruch 14,
dadurch gekennzeichnet, daß das zu beheizende Gehäuse (30) ein Vergaser- oder Vergasergehäuse mit Rückführleitung (34) für die Gehäusegase ist, von der ein Leitungsabschnitt einen verengten Querschnitt (37) aufweist, und daß die Heizvorrichtung (1, 1') derart angebracht ist, daß die Sohle (16, 16') gegen den Leitungsabschnitt verengten Querschnitts (37) aufgedrückt ist.

16. Anwendung nach Anspruch 14,
dadurch gekennzeichnet, daß das zu beheizende Gehäuse (30) ein Klappenventilgehäuse ist, zur Regelung der Luftdurchflußmenge in einer Einspritzanlage mit einer Leerlaufschaltung, die eine Abzweigvorrichtung (38) auf eine Einlaßleitung (31) zum Durchfluß einer Luftdurchflußmenge beim Betrieb des Motors im Leerlauf, oder ein Vergasergehäuse mit Abzweigung für den Durchfluß zusätzlicher Luft in den Motor, wobei die Abzweigung (38) in dem Klappenventilgehäuse (30) eine Eichzone (39) verengten Querschnitts aufweist, und daß die Heizvorrichtung (1, 1') derart auf dem Gehäuse (30) angebracht ist, daß ihre Sohle (16, 16') gegen die Eichzone (39) elastisch aufgedrückt ist.

## Claims

1. Thermoresistant module which can be used as a temperature sensor or electric heating device (1, 1'), comprising a thermistor (20, 20'), an electrically isolating support (4, 4'), two electric supply terminals (25, 26; 25', 26') which are at least partially mounted in the support and are electrically isolated from one another, an electrically conductive body (16, 16') which has good thermal conductivity, intended to be in a heat exchange relationship with a medium (6, 30, 37, 39) to be heated, or of which the temperature is to be measured, and which is mounted on the support (4, 4'), the thermistor (20, 20') being disposed between the support (4, 4') and the conductive body (16, 16') against which it is maintained resiliently thrust, being itself resiliently maintained electrically connected to a first supply terminal (25,25') hy first resilient means (23, 23'), the conductive body (16, 16') being resiliently maintained electrically connected to the second supply terminal (26, 26') by second resilient means (24, 24'), which are electrically isolated (10, 10') from the first resilient means (23, 23'), characterised in that the conductive body (16, 16') is mounted on the support (4, 4') with mounting play which permits relative displacements of a limited extent of the body and support in at least one general direction of thrust of the resilient means (23, 24; 23', 24').

2. Thermoresistant module according to claim 1, characterised in that the thermistor (20, 20') is supplied by a first electrode (23, 23') connected to the first supply terminal (25, 25'), and maintained resiliently in contact with the thermistor (20, 20') by the first resilient means (23, 23') and by a second electrode (24, 24') connected to the second supply terminal (26, 26') and resiliently thrust by the second resilient means (24, 24') which maintain it electrically connected to the conductive body (16, 16'), the first and second electrodes (23, 24; 23' 24') being substantially accommodated respectively in a first recess (8, 8') and a second recess (9, 9') of the isolating support (4, 4'), which are separated from one another by an isolating screen (10, 10').

3. Thermoresistant module according to claim 2, characterised in that the first electrode (23, 23') and second electrode (24, 24') are resiliently maintained in electrically conductive contact respectively against the first supply terminal (25, 25') and second supply terminal (26, 26'), respectively by first resilient means (23, 23') and second resilient means (24, 24') which are substantially accommodated respectively in the first recess (8, 8') and the second recess (9, 9') of the support (4, 4').

4. Thermoresistant module according to claim 3, characterised in that the first resilient means (23, 23') are electrically conductive and constitute the first electrode, and are supported resiliently firstly against the first supply terminal (25, 25') projecting into the first recess (8, 8') of the support (4, 4'), and secondly against the thermistor (20, 20') such as to maintain the latter continually thrust against the conductive body (16, 16').

5. Thermoresistant module according to claim 3 or claim 4, characterised in that the second resilient means (24, 24') are electrically conductive and constitute the second electrode, which is resiliently supported firstly against the second supply terminal (26, 26') projecting into the second recess (9, 9') of the support (4, 4'), and secondly against an electrically conductive component (21, 21') which it maintains resiliently thrust against the conductive body (16, 16'), and such that the electrically conductive component (21, 21') is isolated from the thermistor (20, 20').

6. Thermoresistant module according to claim 4 or claim 5, characterised in that at least one of the first and second electrodes (23, 24; 23', 24') is in the form of an electrically conductive compressed helical spring.

7. Thermoresistant module according to claim 6, characterised in that the first and second recesses (8', 9') of the support (4') are delimited on both sides of an isolating duct (10') which projects onto the base of a cavity of the support (4'), the first recess (8') inside the duct (10') being cylindrical and accommodating the first helical spring electrode (23'), the second recess (9') being annular and surrounding the duct (10'),andaccommodating the second helical spring electrode (24') such that the two springs are accommodated one inside the other, and are isolated from one another by the isolating duct.

8. Thermoresistant module according to any one of claims 1 to 7, characterised in that at least one of the two components constituted by the support (4, 4') has resilient tabs (13, 13') which are provided with claws (14, 14') on their ends in order to snap resiliently behind a step (18, 18') of the other component, with locking play in the general longitudinal direction of the tabs (13, 13') which corresponds to the mounting play.

9. Thermoresistant module according to claim 8, characterised in that the support (4') comprises a skirt with a general substantially frusto-conical shape, which at least partially surrounds the recesses (8', 9') of the support, and in which radial slots delimit resilient tabs (13') which have claws (14') which project radially outwards and snap resiliently in an inner groove (19') of a peripheral collar (18') of the conductive body (16').

10. Thermoresistant module according to any one of claims 1 to 9, characterised in that the supply terminals (25, 26: 25' 26') are the terminals of an electrical connector (3, 3') which is integral with the support (4, 4').

11. Thermoresistant module according to any one of claims 1 to 10, characterised in that the support (4, 4') has an outer peripheral groove (11, 11') in which an O-ring seal (12, 12') is retained.

12. Electric heating device (1, 1') characterised in that it comprises a thermoresistant module according to any one of claims 1 to 12, of which the thermistor (20, 20') has a positive temperature coefficient (PTC), is in the form of a substantially cylindrical lozenge, and of which the conductive body (16, 16') is a metal, generally cylindrical base plate which forms a radiator, and on its flat surface which faces the support (4, 4') has a recess (17) in which the thermistor (20, 20') is retained spaced from the support (4, 4').

13. Heating device (1') according to claim 12, which comprises a thermoresistant module according to claim 5, characterised in that the recess of the base plate (16') is at least partially surrounded by a shoulder of the base plate, against which there is maintained thrust the electrically conductive component in the form of an annular plate (21') for supporting the second electrode (24'), each of the supply terminals also being annular and resiliently thrust against the base of the corresponding recess (8', 9') of the support (4') by the corresponding resilient means (23', 24').

14. Application of the electric heating device (1, 1') according to either one of the preceding claims 12 and 13, characterised in that it consists of heating a body (30) with an intake pipe (31) which contains a rotary throttle unit (32) of a flow control device for an internal combustion engine supply installation, by mounting the heating device (1, 1') by means of its support (4, 4') on the body (30) with an intake pipe (31), such that the base plate (16, 16') is resiliently thrust against an area to be heated of the body (30) with an intake pipe (31).

15. Application according to claim 14, characterised in that the body (30) to be heated is a body of a carburettor or flap valve with a pipe (34) for recycling casing gases, part of the pipe of which has a throttled section (37), and in that the heating device (1, 1') is mounted such that its base plate (16, 16') is thrust against the part of the pipe which has a throttled cross-section (37).

16. Application according to claim 14, characterised in that the body (30) to be heated is a body of a flap valve, for controlling the flow of air in an injection installation, with an idling circuit which comprises a by-pass (38) on the intake pipe (31) for passage of an air flow for idling of the engine, or a carburettor body with a by-pass for passage of additional air to the engine, the by-pass (38) having in the flap valve body (30) a calibration area (39) with a reduced cross-section, and in that the heating device (1, 1') is mounted on the body (30) such that the base plate (16, 16') is thrust resiliently against the calibration area (39).
